(19) Europäisches Patentamt
European Patent Office
Office européen des brevets

(11) **EP 2 771 227 B1**

(12) **EUROPÄISCHE PATENTSCHRIFT**

(45) Veröffentlichungstag und Bekanntmachung des Hinweises auf die Patenterteilung:
**25.05.2016 Patentblatt 2016/21**

(21) Anmeldenummer: **12750784.6**

(22) Anmeldetag: **28.08.2012**

(51) Int Cl.:
*B62D 15/02* (2006.01)      *B60W 30/08* (2012.01)
*B60W 10/06* (2006.01)      *B60W 10/11* (2012.01)
*B60W 10/184* (2012.01)     *B60W 10/20* (2006.01)
*B60W 30/00* (2006.01)      *B60W 30/095* (2012.01)
*G01C 21/26* (2006.01)      *B60W 30/10* (2006.01)

(86) Internationale Anmeldenummer:
**PCT/EP2012/066695**

(87) Internationale Veröffentlichungsnummer:
**WO 2013/060507 (02.05.2013 Gazette 2013/18)**

(54) **VERFAHREN ZUM FÜHREN EINES FAHRZEUGS UND FAHRERASSISTENZSYSTEM**

METHOD FOR GUIDING A VEHICLE, AND DRIVER ASSISTANCE SYSTEM

PROCÉDÉ POUR CONDUIRE UN VÉHICULE ET SYSTÈME D'ASSISTANCE AU CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2011 DE 102011085325**

(43) Veröffentlichungstag der Anmeldung:
**03.09.2014 Patentblatt 2014/36**

(73) Patentinhaber: **Robert Bosch GmbH**
**70442 Stuttgart (DE)**

(72) Erfinder:
• **GRINENVAL, Charlotte**
  **71636 Ludwigsburg (DE)**
• **WILHELM, Ulf**
  **71277 Rutesheim (DE)**
• **RENTSCHLER, Tobias**
  **75180 Pforzheim (DE)**
• **SCHROEDER, Wolfgang**
  **71706 Markgroeningen (DE)**
• **KNOOP, Michael**
  **71638 Ludwigsburg (DE)**

(56) Entgegenhaltungen:
EP-A1- 1 977 946          WO-A1-03/094130
GB-A- 2 394 702           US-A1- 2005 125 121
US-A1- 2010 145 575       US-A1- 2011 231 062

**Beschreibung**

Die Erfindung betrifft ein Verfahren zum Führen eines Fahrzeugs gemäß Patentanspruch 1 und ein Fahrerassistenzsystem gemäß Patentanspruch 10.

Stand der Technik

Im Stand der Technik sind verschiedene Fahrerassistenzsysteme bekannt, mit denen eine Unterstützung der Fahrfunktion des Fahrzeugs und weiterer Funktionen des Fahrzeugs durchgeführt werden, wie z. B. eine automatische Abstandsregelung, eine Auffahrwarnung, ein Spurhalteassistent, eine Nachtsichtkamera mit Personenerkennung, ein Parkassistent zum automatischen Einparken des Fahrzeugs und ein Spurwechselassistent zur Erkennung eines Fahrzeugs in einem toten Winkel. Verschiedene Fahrerassistenzsysteme sind in dem Artikel "Zukunft der Fahrerassistenz mit neuen E/E-Architekturen", ATZ Elektronik, 04/2011, Seiten 8 bis 15 beschrieben.

Aus WO 03/094130 A sind ein Verfahren und eine Vorrichtung zur Fahrerinformation, bzw. zur Reaktion bei Verlassen der Fahrspur bekannt. Dabei wird der Verlauf wenigstens einer Randmarkierung der Fahrspur ermittelt, die zu erwartende Bahn des Fahrzeugs bestimmt und in Abhängigkeit dieser Größen das mögliche Verlassen der Fahrspur durch das Fahrzeug ermittelt. Bei der Bestimmung der Bahn des Fahrzeugs werden zukünftige Reaktionen des Fahrers berücksichtigt.

Aus US 2011/0231062 A1 ist ebenfalls ein Verfahren zur Einhaltung einer Fahrspur bekannt, wobei ein zukünftiger Fahrzustand des Fahrzeugs berechnet wird und abhängig davon die Führung des Fahrzeugs in der Weise durchgeführt wird, dass das Fahrzeug eine vorgegebene Fahrspur einhält.

Aus EP 1 977 946 A1 ist ein Fahrerassistenzsystem für die Umfelderkennung und -erfassung einer Solltrajektorie bekannt. Bei diesem Verfahren ist eine Steuerung für ein Fahrerassistenzsystem mit Sensoren vorgesehen, wobei die Sensoren zur Erfassung eines Fahrzeugumfelds vorgesehen sind. Die Störung ist vorgesehen, um einen Eingriff in Bordsysteme des Fahrzeugs in Abhängigkeit von Ausgangssignalen der Sensoren vorzunehmen, wobei die Sensoren das Fahrzeugumfeld auf Hindernisse überwachen. Bei Erfassen eines Hindernisses wird eine Solltrajektorie des Fahrzeugs derart verändert, dass ein gefahrloses Passieren des erfassten Hindernisses ermöglicht wird.

Aus US 2005/0125121 A1 ist ein Verfahren zum Führen eines Fahrzeugs bekannt, wobei anhand eines Sensors mindestens ein Parameter der Umgebung des Fahrzeugs erfasst wird, wobei anhand des Parameters ein Fahrkorridor ermittelt wird, wobei abhängig von wenigstens einem weiteren Parameter innerhalb des Fahrkorridors eine Bewegungsbahn ermittelt wird, und wobei abhängig von der ermittelten Bewegungsbahn die Führung des Fahrzeugs angepasst wird, wobei die Bewegungsbahn unter Berücksichtigung einer Strategie ermittelt wird, wobei die Strategie aus einem Speicher ausgelesen wird.

Der nächstliegende Stand der Technik ist in der US2005/0125121 A1 zu sehen.

Offenbarung der Erfindung

Die Aufgabe der Erfindung besteht darin, ein verbessertes Verfahren zur Führung eines Fahrzeugs und ein verbessertes Fahrerassistenzsystem bereitzustellen.

Die Aufgabe der Erfindung wird durch das Verfahren gemäß Patentanspruch 1 und durch das Fahrerassistenzsystem gemäß Patentanspruch 9 gelöst. Weitere vorteilhafte Ausführungsformen der Erfindung sind in den abhängigen Ansprüchen angegeben.

Ein Vorteil des beschriebenen Verfahrens besteht darin, dass ein Fahrkorridor zum Führen des Fahrzeugs abhängig von einem Umgebungsparameter ermittelt wird und dass abhängig von einem weiteren Parameter innerhalb des Fahrkorridors eine Bewegungsbahn ermittelt wird, die für die Führung des Fahrzeugs verwendet wird. Auf diese Weise wird eine verbesserte Führung des Fahrzeugs erreicht, da in einem zweistufigen Verfahren die tatsächliche Bewegungsbahn ermittelt wird. Zuerst wird anhand eines Umgebungsparameters ein Fahrkorridor ermittelt. Der Fahrkorridor ist jedoch in der Regel noch so breit, dass eine weitere Verfeinerung abhängig von einem weiteren Parameter möglich ist. Abhängig von dem weiteren Parameter wird nun innerhalb des Fahrkorridors die tatsächlich zu fahrende Bewegungsbahn ermittelt. Somit ist es möglich, zusätzlich zu der Umgebung, d.h. z.B. der Breite der Straße, der Straßenkrümmung und der Verkehrssituation noch weitere Parameter zur optimierten Festlegung der Bewegungsbahn zu berücksichtigen.

In der erfindungsgemäßen Ausführungsform wird die Bewegungsbahn unter Berücksichtigung einer Strategie, beispielsweise eines maximalen Komforts für den Fahrer oder einer maximalen Dynamik der Fahrzeugbewegung ermittelt. Dabei wird die Strategie vom Fahrer eingegeben oder aus einem Speicher ausgelesen. Somit kann die Bewegungsbahn an die Situation oder an individuelle Bedürfnisse des Fahrers angepasst werden.

In der erfindungsgemäßen Ausführungsform ist eine Bewertungsfunktion vorgesehen, die abhängig von Anforderungen weiterer Funktionen des Fahrzeugs einen Einfluss auf die Ermittlung der Bewegungsbahn nimmt. Somit ist sichergestellt, dass zusätzlich zu der Führungsfunktion des Fahrzeugs auch weitere Funktionen des Fahrzeugs berücksichtigt werden. Beispielsweise kann bei einem Elektrofahrzeug eine leere Batterie eine andere Bewegungsfunktion erfordern als eine volle Batterie.

In einer weiteren Ausführungsform ist der weitere Parameter ein Parameter der Bewegung des Fahrzeugs und/oder ein Betriebsparameter des Motors des Fahrzeugs und/oder ein Betriebsparameter einer Bremse des Fahrzeugs und/oder ein Betriebsparameter einer Lenkung des Fahrzeugs und/oder ein Fahrerwunsch. Die Berücksichtigung der Bewegung des Fahrzeugs ermöglicht es beispielsweise, eine Querbeschleunigung des Fahrzeugs oder eine Längsbeschleunigung des Fahrzeugs zu optimieren. Zudem kann durch die Berücksichtigung eines Betriebsparameters des Motors beispielsweise eine effiziente Ausnutzung des Drehmoments oder ein kraftstoffsparendes Fahren ermöglicht werden. Weiterhin kann durch einen Betriebsparameter der Bremse ein optimiertes Bremsen durch eine entsprechende Wahl der Bewegungsbahn erreicht werden. Zudem kann durch die Berücksichtigung des Lenkwinkels des Fahrzeugs und/oder des Fahrerwunsches eine optimierte Bewegungsbahn ermittelt werden. Beispielsweise kann berücksichtigt werden, ob der Fahrer ein hohes oder ein niedriges Drehmoment anfordert.

In einer weiteren Ausführungsform werden als weiterer Betriebsparameter eine Verfügbarkeit eines Stellers des Fahrzeugs und/oder eine Stellreserve eines Stellers des Fahrzeugs verwendet. Damit kann vor der Festlegung der Bewegungsbahn überprüft werden, ob die tatsächliche Funktion des Fahrzeugs wie beispielsweise ein weiteres Bremsen, ein weiteres Beschleunigen, ein stärkeres Einlenken des Fahrzeugs überhaupt zur Verfügung steht. Damit werden die tatsächlichen Möglichkeiten des Fahrzeugs bei der Wahl der Bewegungsbahn berücksichtigt.

In einer weiteren Ausführungsform wird das Fahrzeug durch eine Längsregelung und/oder durch eine Querregelung entlang der ermittelten Bewegungsbahn geführt.

In einer weiteren Ausführungsform ist eine Schnittstelle zur Ausgabe einer Information an einen Fahrer und/oder zur Eingabe einer Information durch den Fahrer vorgesehen. Damit kann der Fahrer über die gewählte Bewegungsbahn informiert werden. Zudem kann der Fahrer Einfluss auf die Parameter und/oder die Wahl der Bewegungsbahn ausüben. Beispielsweise kann über eine entsprechende Eingabe der Fahrer die gewünschte Strategie zur Ermittlung der Bewegungsbahn vorgeben.

In einer weiteren Ausführungsform wird eine Umgebungssituation aufgrund eines Modells ermittelt und abhängig von wenigstens einem Betriebsparameter eine Situationsanalyse durchgeführt. Aufgrund der Situationsanalyse werden der Fahrkorridor ermittelt.

Die Erfindung wird im Folgenden anhand der Figuren näher erläutert. Es zeigen:

Figur 1    eine schematische Darstellung eines Fahrerassistenzsystem;

Figur 2    eine erste Fahrsituation;

Figur 3    eine zweite Fahrsituation;

Figur 4    eine dritte Fahrsituation; und

Figur 5    einen schematischen Aufbau eines Fahrerassistenzsystems.

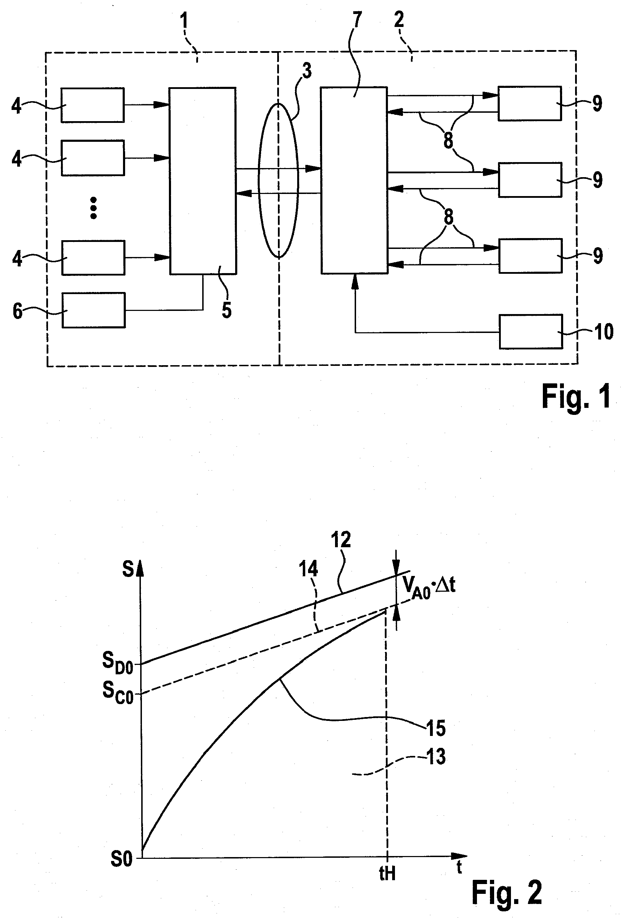

Figur 1 zeigt in einer schematischen Darstellung ein Fahrerassistenzsystem zur Führung eines Fahrzeugs. Die Führung des Fahrzeugs beinhaltet die Fahrzeugführung und die Fahrzeugbewegungsregelung. Beide Domänen zeichnen sich durch unterschiedlich geartete Aufgaben aus. Die Fahrzeugführung beinhaltet eine Bahnplanung für einen Fahrkorridor mit einem Vorausschauhorizont in einer Größenordnung von beispielsweise 10 bis 100 m, das entspricht ungefähr einer Zeitdauer von 1 bis 10 Sekunden. Die Fahrzeugbewegungsregelung beschäftigt sich mit der Einstellung der geplanten Bewegungsbahn innerhalb des Fahrkorridors im Sinne einer Regelung mit Vorausschauhorizont in einem Bereich von < 10m, d.h. von Vorausschauzeiten < 1s.

Die Verschiedenheit der Aufgaben ermöglicht eine organisatorische Trennung und das Vorsehen einer Schnittstelle zwischen den zwei Domänen der Fahraufgabe. Somit wird vorgeschlagen, eine Funktion Fahrzeugführung 1 und eine Funktion Fahrzeugbewegungsregelung 2 vorzusehen, die über eine Schnittstelle 3 miteinander verbunden sind, wie in Figur 1 dargestellt ist. Die Fahrzeugführung 1 ist über die Schnittstelle 3 mit der Fahrzeugbewegungsregelung 2 verbunden, wobei die Schnittstelle 3 jedoch für alle Fahrerassistenzfunktionen nutzbar ist. Der von der Fahrzeugführung 1 vorgegebene Fahrkorridor wird von der Fahrzeugbewegungsregelung 2 verwendet, um eine konkrete Bewegungsbahn in Abhängigkeit von einem weiteren Parameter festzulegen. Dabei berücksichtigt die Fahrzeugbewegungsregelung 2 weitere Randbedingungen in Bezug auf ein Fahrdynamikpotential des Fahrzeugs und auf Stellpotentiale von Stellern des Fahrzeugs. Die Fahrzeugführung 1 ist mit mehreren Sensoren 4 zur Erfassung eines Parameters der Umgebung verbunden. Die Sensoren 4 können beispielsweise als Radarsensor, Videosensor, Lidarsensor, Ultraschallsensor ausgebildet sein. Die Signale der Sensoren 4 werden an eine erste Verarbeitungseinheit 5 übermittelt. Die Signale der Sensoren 4 werden einer Signalverarbeitung unterzogen und anschließend wird mithilfe einer modellbasierten Schätzung ein Umfeldmodell erstellt. Dabei werden Umfeldobjekte wie z.B. Fußgänger, Fahrradfahrer, Autofahrer aber auch Kreuzungen, Ampeln, Straßenführung, Straßenbreite, Verkehrsdichte, Wetterverhältnisse usw. erfasst, um die Umgebung zu modellieren. Zudem werden vorzugsweise Informationen einer digitalen Karte über die Straßenführung, die Verkehrsregelung und weitere Gegebenheiten berücksichtigt.

Anschließend wird eine Situationsanalyse durchgeführt und eine Aktionsplanung zur Erstellung des Fahrkorridors durchgeführt. Abhängig von der gewählten Ausführungsform können bereits bei der Planung des Fahrkorridors Parameter und Kriterien, insbesondere Optimierungskriterien, berücksichtigt werden, die beispielsweise zu besonders komfortablen Bewegungsabläufen oder einer besonderen Dynamik, wie z.B. einem hohen Geschwindigkeitsabbau führen. Außerdem können Randbedingungen bezüglich des Fahrdynamikpotentials, z.B. beschrieben durch einen Reibwert, und bezüglich der Stellpotentiale der Steller, z.B. beschrieben als Verfügbarkeit der Stellsysteme und deren Stellreserve berücksichtigt werden. Diese Informationen werden in Form einer Statusrückmeldung von der Fahrzeugbewegungsregelung 2 an die erste Verarbeitungseinheit 5 übermittelt. Die Fahrzeugführung 1 wird unter Berücksichtigung einer Fahrzeugführungsaufgabe, wie z.B. einer Längsführung des Fahrzeugs zu einem vorgegebenen Ziel, einer Querführung des Fahrzeugs innerhalb einer Fahrbahn oder weiterer Vorgaben, wie z.B. einem schadstoffarmen Betreiben des Fahrzeugs, einem schnellen Erreichen eines Zielpunkts, einem kraftstoffsparenden Betreiben des Fahrzeugs usw. ausgeführt. Diese Aufgaben werden von der ersten Verarbeitungseinheit 5 bei der Aktionsplanung berücksichtigt. Abhängig von der gewählten Ausführungsform kann eine zweite Schnittstelle 6 vorgesehen sein, über die die Fahrzeugführung 1 und/oder die Fahrzeugbewegungsregelung 2 Informationen an den Fahrer ausgeben kann oder Eingaben vom Fahrer erhalten kann. Die Ausgabe kann optisch, haptisch und/oder akustisch erfolgen. Die Eingabe kann ein entsprechendes Eingabemittel, beispielsweise ein Touch-Screen, aufweisen.

Die erste Verarbeitungseinheit 5 ist über die Schnittstelle 3 mit einer zweiten Verarbeitungseinheit 7 der Fahrzeugbewegungsregelung 2 verbunden. Die zweite Verarbeitungseinheit 7 steht über Signal- und Steuerleitungen 8 mit Stellern 9 des Fahrzeugs in Verbindung. Unter einem Steller werden alle Arten von steuerbaren Stellsystemen, wie z.B. ein Bremssystem, ein Motorgetriebe, ein Lenksystem des Fahrzeugs verstanden. Zudem ist die zweite Verarbeitungseinheit 7 mit weiteren Sensoren 10 verbunden, die beispielsweise Betriebsparameter des Fahrzeugs erfassen. Beispielsweise kann als weiterer Sensor 10 ein Geschwindigkeitssensor vorgesehen sein. Zudem kann der weitere Sensor 10 beispielsweise als Beschleunigungssensor ausgebildet sein. Die zweite Schnittstelle 6 berechnet aus dem vorgegebenen Fahrkorridor unter Berücksichtigung der Zustände der Steller 9 und des weiteren Betriebsparameters des Fahrzeugs eine Bewegungsbahn und die der Bewegungsbahn entsprechenden Sollwerte für die Fahrzeugbewegung. Die Sollwerte für die Fahrzeugbewegung werden im Sinne einer Regelung mit Istwerten der Fahrzeugbewegung verglichen. Aus dem Vergleich resultieren Steuerwerte für die Stellsysteme 9, die zu einer Umsetzung der ermittelten Bewegungsbahn führen.

Bei der Berechnung der Sollwerte für die Fahrzeugbewegung, d.h. bei der Ermittlung der Bewegungsbahn, berücksichtigt die zweite Schnittstelle 6 beispielsweise einen Status und/oder eine Stellreserve des wenigstens einen Stellsystems.

Die vorgeschlagene Struktur weist die Vorteile auf, dass die Schnittstelle 3 universell ist und von verschiedenen Fahrerassistenzfunktionen genutzt werden kann. Zudem bietet die Struktur einen Freiraum für die Berücksichtigung vorliegender Randbedingungen in der Fahrzeugbewegungsregelung 2. Weiterhin ist eine Aufgabentrennung zwischen der Fahrzeugführung 1 und der Fahrzeugbewegungsregelung 2 gegeben.

Figur 2 zeigt ein Diagramm einer Fahrsituation, bei der durch das Fahrerassistenzsystem eine längsdynamische Abstandsregelung durchgeführt wird. Das Diagramm zeigt die Zeit t, wobei die Zeit t=0 der Gegenwart entspricht und die Zeit t>0 eine in die Zukunft weisende Vorausschauzeit darstellt. Zudem ist ein Abstand s zu einem vorausfahrenden Fahrzeug angegeben. Die Ortskoordinaten beziehen sich auf einen Referenzpunkt im Fahrzeug, z.B. einen Mittelpunkt der Hinterachse. Mit s wird die zurückgelegte Bogenlänge bezeichnet. Zum Zeitpunkt t=0 steht das Fahrzeug an der Bogenlänge s=0.

Im Folgenden wird ein Ausführungsbeispiel für eine reine Längsführung beschrieben. Figur 2 zeigt den zur Verfügung stehenden Fahrkorridor für die Vorausschauzeit tH. Eine Bewegungsbahn eines vorausfahrenden Fahrzeuges ist in Form einer Linie 12 mit dem Startpunkt SDO dargestellt. Als Fahrerassistenzsystem ist eine automatische Abstandsregelung vorgesehen. Es wird angenommen, dass das vorausfahrende Fahrzeug sich mit konstanter Geschwindigkeit bewegt. Das Fahrerassistenzsystem möchte einen Abstand einstellen, der durch eine vorgegebene Zeitlücke $\Delta t$ vorgegeben wird. Durch eine Subtraktion des Vollabstands von der Distanz zum vorausfahrenden Fahrzeug 12 ergibt sich die obere Grenze des Korridors 13. Der Korridor 13 für die Bewegung des Fahrzeugs wird durch den Sollabstand 14 zum vorausfahrenden Fahrzeug beschränkt. Der Sollabstand 14 wird durch die vorgegebene Zeitlücke $\Delta t$ und die Geschwindigkeit va0 des vorausfahrenden Fahrzeugs festgelegt.

Im dargestellten Ausführungsbeispiel ist der Sollabstand 14 ebenfalls durch eine Gerade dargestellt, die zum Zeitpunkt t=0 mit der Bogenlänge SC0 beginnt. Die Zeitlücke kann beispielsweise vom Fahrer vorgegeben werden oder voreingestellt sein. Der in Figur 2 dargestellte Fahrkorridor 13 wird von der ersten Verarbeitungseinheit 5 an die zweite Verarbeitungseinheit 7 weitergegeben. Die zweite Verarbeitungseinheit 7 ermittelt nun eine Bewegungsbahn 15 innerhalb des Fahrkorridor 13, die als Linie dargestellt ist. Dabei berücksichtigt die zweite Verarbeitungseinheit 7 wie beschrieben vorgegebene Parameter und/oder vorgegebene Zustände von Stellsystemen. Zudem wird das Fahrzeug in der Weise angesteuert, dass das Fahrzeug die Bewegungsbahn 15 einhält.

Prinzipiell kann der Fahrkorridor, d.h. der befahrbare Raum, durch verschiedene Beschreibungsformen charakterisiert werden: Vorgabe eines Gebiets in Wegkoordinaten in Abhängigkeit der Vorausschauzeit t

mit den Wegkoordinaten x, y oder alternativ der Abstand zum vorausfahrenden Fahrzeug s. Rein längsdynamische Funktionen nutzen vorzugsweise die Bogenlänge s über der Vorausschauzeit t. Bei rein querdynamischen Funktionen kann die Abhängigkeit über der Vorausschauzeit entfallen. Man betrachte dabei die y-Koordinate über der x-Koordinate. Zudem kann auch eine Mittenbahn durch eine Bogenlänge s als Funktion der Vorausschauzeit t und der Krümmung k als Funktion der Bogenlänge s verwendet werden. Weiterhin kann vorzugsweise ein Toleranzband um die Mittenbahn angegeben werden. Auch diese Beschreibungsform ist skalierbar. Rein längsdynamische Funktionen nutzen die Bogenlänge s über die Zeit t. Rein querdynamische Funktionen nutzen die Krümmung k über die Bogenlänge s. Zudem können kombinierte Funktionen aus längsdynamischer und querdynamischer Funktion verwendet werden. Weiterhin kann eine Datei mit einem Manöverkatalog verwendet werden, in der eine Auswahl von vorgegebenen Manövern abgelegt sind. Aus dem Manöverkatalog kann ein Manöver ausgewählt werden und mit den spezifischen vorliegenden Parametern an die vorliegende Situation angepasst werden. Zudem kann ein Toleranzband um die vorgegebene Manöverbahn angegeben werden. Das vorgegebene Manöver wird mithilfe der vorliegenden Parameter der aktuellen Situation in eine Manöverbahn umgewandelt.

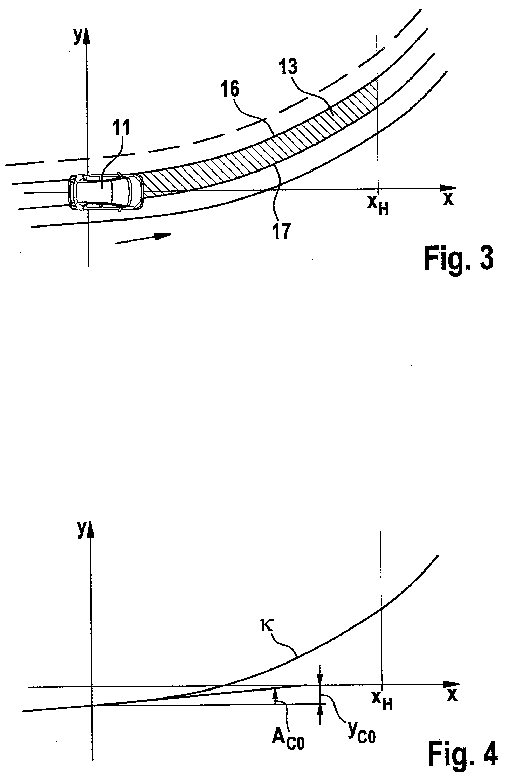

**[0029]** Figur 3 zeigt eine weitere Ausführungsform, bei der ein Fahrkorridor 13 für eine reine Querführung verwendet wird. Figur 3 zeigt das Fahrzeug 11 in der x-y-Ebene. Mit x wird die Koordinate in Richtung der Fahrzeuglängsachse bezeichnet. Zum Zeitpunkt t=0 steht das Fahrzeug bei x=0. Mit y wird die Koordinatenrichtung der Fahrzeugquerachse bezeichnet. Zum Zeitpunkt t=0 steht das Fahrzeug bei y=0. Figur 3 zeigt eine Querkoordinate y über eine Längskoordinate x bis zu einem Vorschauhorizont xH. Die erste Verarbeitungseinheit 5 ermittelt einen Fahrkorridor 13, der zwischen einer linken Korridorgrenze 16 und einer rechten Korridorgrenze 17 liegt. Das Fahrzeug 11 bewegt sich entlang des Fahrkorridors 13 in x-Richtung. Der Fahrkorridor 13 kann durch Kreissegmente für die linke und die rechte Korridorgrenze 16, 17 mit dem Parametern Querablage, Winkel und Krümmung beschrieben werden. Zudem können Klothoidensegmente für die linke und die rechte Korridorgrenze 16, 17 mit dem Parametern Querablage, Winkel und Krümmung und Krümmungsänderung vorgesehen sein. Zudem können die linke und die rechte Korridorgrenze 16, 17 mithilfe von Koordinatenpunkten (x, y) festgelegt werden, zwischen denen die Korridorgrenzen 16, 17 interpoliert werden.

**[0030]** Figur 4 zeigt die Beschreibung einer rein querdynamischen linken Korridorgrenze 16 als Kreissegment mit folgenden Parametern: $y_{C0}$: Querablage der Grenze zum Bezugspunkt im Fahrzeug 11, $A_{CO}$: Differenzwinkel zwischen Tangente und Längsachse des Fahrzeugs, k die Krümmung der linken Korridorgrenze und xh der Vorausschauhorizont.

**[0031]** In einer weiteren Ausführungsform können zusätzlich zur Übermittlung des Fahrkorridors an die zweite Verarbeitungseinheit 7 auch ein Strategieauftrag an die zweite Verarbeitungseinheit 7 übergeben werden. Der Strategieauftrag kann beispielsweise über eine entsprechende Eingabe durch den Fahrer festgelegt werden oder in einem Speicher des Fahrzeugs abgelegt sein. Ein Strategieauftrag legt fest, welche Randbedingung die Fahrzeugbewegungsregelung 2 bei der Planung der konkreten Bewegungsbahn innerhalb des Fahrkorridors beachten muss. Beispiele für derartige Strategieaufträge sind:

Optimierungsauftrag, mit dem ein Optimierungsziel für die Fahrzeugbewegungsregelung, durchgeführt wird. Als Optimierungsziel kann beispielsweise eine Maximierung des Fahrkomforts oder eine Maximierung der Dynamik, d.h. maximale Beschleunigung oder maximale Bremsung verwendet werden.

Interaktionsauftrag Funktion-Fahrer

**[0032]** Dabei kann durch einen gerade noch spürbaren Eingriff in ein Stellsystem des Fahrzeugs, z.B. über einen kurzen Bremsruck oder über ein geringes Lenkmoment der Fahrer vor einer kritischen Situation gewarnt werden, wobei der Fahrer vorzugsweise weiterhin die Hoheit über das Stellsystem behält. Zudem kann die Interaktionsfunktion erst aktiv werden, wenn der Fahrer die Interaktionsfunktion beispielsweise durch eine Betätigung des Bremspedals oder des Lenkrads auslöst. Weiterhin kann die Interaktionsfunktion automatisch ausgelöst werden, wobei die Interaktionsfunktion für eine begrenzte Zeit arbeitet, wenn der Fahrer die Interaktionsfunktion nicht vorher abbricht. Zudem kann die Interaktionsfunktion über eine unbegrenzte Zeit arbeiten, wenn der Fahrer nicht vorher die Hoheit über die Fahrzeugbewegung übernimmt.

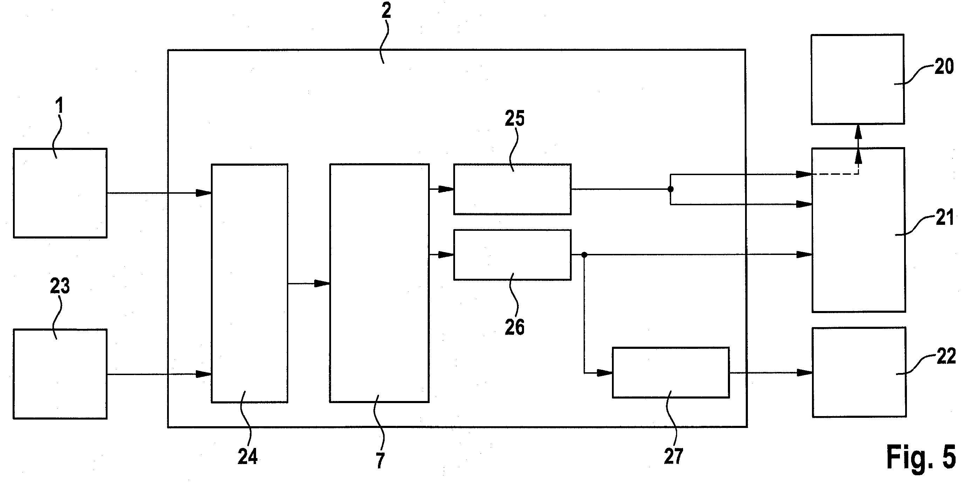

**[0033]** Figur 5 zeigt in einer schematischen Darstellung ein Beispiel für den Aufbau der Fahrzeugregelung 2 mit der zweiten Verarbeitungseinheit 7. Bei dem dargestellten Ausführungsbeispiel wird ein Triebstrang (Motor und Getriebe) 20 für die Beschleunigung, ein elektronisches Stabilitätsprogramm (ESP) 21 für Bremsungen und Querdynamikeingriffe über einseitige Bremsungen und ein elektrische Servolenkung (EPS) 22 für Lenkmomenteingriffe angesteuert. In dem dargestellten Ausführungsbeispiel werden vorzugsweise auch Anforderungen aus weiteren Funktionsdomänen 23 berücksichtigt. Zur Berücksichtigung weiterer Funktionsdomänen 23 ist ein Entscheider 24 vorgesehen, der ebenfalls mit der Fahrzeugführung 1 in Verbindung steht. Abhängig von festgelegten Regeln entscheidet der Entscheider 24, ob die Fahrzeugführung 1 oder eine weitere Domäne von der zweiten Bearbeitungseinheit 7 bearbeitet wird. Abhängig von der gewählten Ausführungsform kann auf den Entscheider 24 verzichtet werden und die Fahrzeugführung 1, wie in Figur 1 dargestellt ist, direkt mit der zweiten

Verarbeitungseinheit 7 verbunden sein. Dies ist beispielsweise der Fall, wenn nur Fahrerassistenzfunktionen Anforderungen stellen. Der Entscheider 24 ist mit der zweiten Verarbeitungseinheit 7 verbunden. Die zweite Verarbeitungseinheit 7 plant in den Fahrkorridor beispielsweise nach Maßgabe eines Strategieauftrags und/oder eines Fahrdynamikpotentials (Reibwert) und/oder eines Stellerpotentials (Verfügbarkeit und Stellreserve) eines Stellsystems eine konkrete Bewegungsbahn. Um diese Bewegungsbahn zu erreichen, werden Sollwerte der Fahrzeugbewegungsgrößen, z.B. der Beschleunigung für die Längsbewegung und/oder für die Querbewegung ermittelt. Die Sollwerte werden mit vorliegenden Istwerten verglichen. Aus dem Vergleich werden Regelwerte ermittelt, die beispielsweise an einen Längsregler 25 und einen Querregler 26 vergeben werden. Der Längsregler 25 setzt die Regeldifferenz der Beschleunigung in Ansteuerwerte für den Triebstrang 20 und das ESP 21 um und gibt diese an das ESP 21 und den Triebstrang 20 weiter. Der Querregler 26 ermittelt aus der Regeldifferenz und der Sollwerten Ansteuerwerte für das ESP (z.B. Giermomente über einen einseitigen Bremseingriff) und/oder über den zusätzlichen Lenkmomentenregler 27 Ansteuerwerte für das EPS in Form eines Lenkmomenteingriffs über eine elektrische Servolenkung.

Abhängig von der gewählten Ausführungsform berücksichtigt die zweite Verarbeitungseinheit 7 ein Optimierungskriterium, das beispielsweise folgende Kriterien umfassen kann:

Komfortable Längsbewegung und Minimierung der Längsbeschleunigung usw. $\int_0^{t_H} a_x^2 dt \to MIN$ , wobei $a_x$ die Beschleunigung in x-Richtung und tH die Vorausschauzeit ist,

oder Minimierung des Längsrucks (zeitliche Ableitung der Längsbeschleunigung) $\int_0^{t_H} \dot{a}_x^2 dt \to MIN$ , wobei $\dot{a}_x$ die Ableitung der Beschleunigung in x-Richtung und tH die Vorausschauzeit ist,

komfortabel quer:

Minimierung der Querbeschleunigung, $\int_0^{x_H} a_y^2 dx \to MIN$ , wobei $a_y$ die Beschleunigung in y-Richtung und xH der Vorausschauhorizont ist,

oder des Querrucks (zeitliche Ableitung der Querbeschleunigung) $\int_0^{x_H} \dot{a}_y^2 dx \to MIN$ , wobei $\dot{a}_y$ die zeitliche Ableitung der Beschleunigung in y-Richtung und xH der Vorausschauhorizont ist,

komfortabel kombiniert:

Minimierung der Gesamtbeschleunigung,

$$\int_0^{t_H} (a_x^2 + a_y^2) dt \to MIN$$

oder des Gesamtrucks,

$$\int_0^{t_H} (\dot{a}_x^2 + \dot{a}_y^2) dt \to MIN$$

hochdynamisch längs:

Maximierung des Geschwindigkeitsabbaus,

$$|\Delta v| = \left| \int_0^{t_H} a_x dt \right| \to MAX$$

hochdynamisch kombiniert:

Maximierung des Geschwindigkeitsabbaus bei gleichzeitiger Vorgabe eines Querversatzes.

Zusätzlich zu den dargestellten Optimierungsaufträgen kann auch eine Optimierung in Bezug auf den Energieverbrauch, den Schadstoffausstoß usw. vorgegeben werden.

**Patentansprüche**

1. Verfahren zum Führen eines Fahrzeuges,

- wobei anhand wenigstens eines Sensors mindestens ein Parameter der Umgebung des Fahrzeuges erfasst wird,
- wobei anhand des Parameters ein Fahrkorridor ermittelt wird,
- wobei abhängig von wenigstens einem weiteren Parameter innerhalb des Fahrkorridors eine Bewegungsbahn ermittelt wird,
- und wobei abhängig von der ermittelten Bewegungsbahn die Führung des Fahrzeuges angepasst wird.,

wobei die Bewegungsbahn unter Berücksichtigung einer Strategie, insbesondere eines maximalen Komforts für den Fahrer oder einer maximalen Dynamik der Fahrzeugbewegung ermittelt wird,

wobei die Strategie vom Fahrer vorgegeben wird oder aus einem Speicher ausgelesen wird, wobei eine Bewertungsfunktion vorgesehen ist, die abhängig von Anforderungen weiterer Funktionen des Fahrzeuges einen Einfluss auf die Ermittlung der Bewegungsbahn nimmt..

**2.** Verfahren nach Anspruch 1, wobei der weitere Parameter ein Parameter der Bewegung des Fahrzeuges und/oder ein Betriebsparameter eines Motors des Fahrzeuges und/oder ein Betriebsparameter einer Bremse des Fahrzeuges und/oder ein Betriebsparameter einer Lenkung des Fahrzeuges und/oder ein Fahrerwunsch ist.

**3.** Verfahren nach einem der vorhergehenden Ansprüche, wobei der weitere Betriebsparameter eine Verfügbarkeit eines Stellers des Fahrzeuges und/oder eine Stellreserve eines Stellers des Fahrzeuges ist.

**4.** Verfahren nach einem der vorhergehenden Ansprüche, wobei die Führung des Fahrzeuges eine Längsregelung der Fahrzeugbewegung und/oder eine Querregelung der Fahrzeugbewegung umfasst.

**5.** Verfahren nach einem der vorhergehenden Ansprüche, wobei eine Schnittstelle zur Ausgabe einer Information an den Fahrer und/oder zur Eingabe eines Befehles durch den Fahrer vorgesehen ist.

**6.** Verfahren nach einem der vorhergehenden Ansprüche, wobei eine Umgebungssituation aufgrund eines Modells ermittelt wird, und wobei abhängig von dem wenigstens einen Betriebsparameter eine Situationsanalyse erfolgt, eine Grundlage für die Ermittlung der Bewegungsbahn darstellt.

**7.** Verfahren nach einem der vorhergehenden Ansprüche, wobei der Fahrkorridor für eine längere Vorausschauzeit geplant wird als die Bewegungsbahn.

**8.** Fahrerassistenzsystem mit einer Recheneinheit, die ausgebildet ist, um ein Verfahren nach einem der vorhergehenden Ansprüche durchzuführen.

**9.** Fahrerassistenzsystem nach Anspruch 8, wobei eine Fahrzeugführung vorgesehen ist, die den Fahrkorridor ermittelt, wobei eine Fahrzeugregelung vorgesehen ist, die anhand des Fahrkorridors die Bewegungsbahn ermittelt und die Bewegung des Fahrzeuges regelt, und wobei die Fahrzeugführung über eine Schnittstelle mit der Fahrzeugregelung verbunden ist.

**Claims**

**1.** Method for guiding a vehicle,

- wherein at least one parameter of the surroundings of the vehicle is detected by means of at least one sensor,
- wherein a driving corridor is determined by means of the parameter,
- wherein a movement path is determined as a function of at least one further parameter within the driving corridor,
- and wherein the guidance of the vehicle is adapted as a function of the determined movement path,

wherein the movement path is determined taking into account a strategy, in particular a maximum degree of comfort for the drive or maximum dynamics of the movement of the vehicle, wherein the strategy is predefined by the driver or is read out from a memory, wherein an evaluation function is provided which influences the determination of the movement path as a function of requirements of further functions of the vehicle.

**2.** Method according to Claim 1, wherein the further parameter is a parameter of the movement of the vehicle and/or an operating parameter of an engine of the vehicle and/or an operating parameter of a brake of the vehicle and/or an operating parameter of a steering system of the vehicle and/or a driver's request.

**3.** Method according to one of the preceding claims, wherein the further operating parameter is an availability of an actuator of the vehicle and/or an actuation reserve of an actuator of the vehicle.

**4.** Method according to one of the preceding claims, wherein the guidance of the vehicle comprises a longitudinal control of the movement of the vehicle and/or lateral control of the movement of the vehicle.

**5.** Method according to one of the preceding claims, wherein an interface for outputting information to the driver and/or for inputting an instruction by the driver is provided.

**6.** Method according to one of the preceding claims, wherein a situation in the surroundings is determined on the basis of a model, and wherein a situation analysis is carried out as a function of the at least one operating parameter and constitutes a basis for the determination of the movement path.

**7.** Method according to one of the preceding claims, wherein the driving corridor is planned for a longer look-ahead time than the movement path.

**8.** Driver assistance system having a computer unit which is designed to carry out a method according to one of the preceding claims.

9. Driver assistance system according to Claim 8, wherein a vehicle guidance system is provided which determines the driving corridor, wherein a vehicle controller is provided which determines the movement path on the basis of the driving corridor and controls the movement of the vehicle, and wherein the vehicle guidance system is connected to the vehicle controller via an interface.

**Revendications**

1. Procédé de guidage d'un véhicule,

    - au moins un paramètre de l'environnement du véhicule étant collecté à l'aide d'au moins un capteur,
    - un corridor de circulation étant déterminé à l'aide du paramètre,
    - une trajectoire de déplacement étant déterminée à l'intérieur du corridor de circulation en fonction d'au moins un paramètre supplémentaire,
    - et le guidage du véhicule étant adapté en fonction de la trajectoire de déplacement déterminée,

    la trajectoire de déplacement étant déterminée en tenant compte d'une stratégie, notamment d'un confort maximal pour le conducteur ou d'une dynamique maximale du déplacement du véhicule,
    la stratégie étant prédéfinie par le conducteur ou étant lue à partir d'une mémoire,
    une fonction d'évaluation étant présente, laquelle influence la détermination de la trajectoire de déplacement en fonction des exigences d'autres fonctions du véhicule.

2. Procédé selon la revendication 1, selon lequel le paramètre supplémentaire est un paramètre de déplacement du véhicule et/ou un paramètre de fonctionnement d'un moteur du véhicule et/ou un paramètre de fonctionnement d'un frein du véhicule et/ou un paramètre de fonctionnement d'une direction du véhicule et/ou un souhait du conducteur.

3. Procédé selon l'une des revendications précédentes, selon lequel le paramètre supplémentaire est une disponibilité de l'organe actionneur du véhicule et/ou une réserve d'actionnement d'un organe actionneur du véhicule.

4. Procédé selon l'une des revendications précédentes, selon lequel le guidage du véhicule comprend une régulation longitudinale du déplacement du véhicule et/ou une régulation transversale du mouvement du véhicule.

5. Procédé selon l'une des revendications précédentes, selon lequel il existe une interface destinée à délivrer en sortie une information au conducteur et/ou destinée à la saisie d'une instruction par le conducteur.

6. Procédé selon l'une des revendications précédentes, selon lequel une situation d'environnement est déterminée en s'appuyant sur un modèle, et selon lequel une analyse de situation est effectuée en fonction de l'au moins un paramètre de fonctionnement, laquelle représente une base pour la détermination de la trajectoire de déplacement.

7. Procédé selon l'une des revendications précédentes, selon lequel le corridor de circulation est planifié pour un temps d'anticipation plus long que la trajectoire de déplacement.

8. Système d'assistance au conducteur équipé d'une unité de calcul qui est configurée pour mettre en oeuvre un procédé selon l'une des revendications précédentes.

9. Système d'assistance au conducteur selon la revendication 8, avec lequel il existe un guidage du véhicule qui détermine le corridor de circulation, avec lequel il existe une régulation de véhicule qui, à l'aide du corridor de circulation, détermine la trajectoire de déplacement et régule le déplacement du véhicule, et avec lequel le guidage de véhicule est relié à la régulation de véhicule par le biais d'une interface.

**Fig. 1**

**Fig. 2**

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03094130 A
- US 20110231062 A1
- EP 1977946 A1
- US 20050125121 A1

**In der Beschreibung aufgeführte Nicht-Patentliteratur**

- Zukunft der Fahrerassistenz mit neuen E/E-Architekturen. *ATZ Elektronik,* April 2011, 8-15